# EUROPÄISCHE PATENTSCHRIFT

(11) **EP 3 152 828 B1**
(45) Veröffentlichungstag und Bekanntmachung des Hinweises auf die Patenterteilung: **08.05.2019**
(21) Anmeldenummer: 15724697.6
(22) Anmeldetag: 28.05.2015
(51) Int. Cl.: H02P 6/14, H02P 21/00

(54) **VERFAHREN UND VORRICHTUNG ZUR STEUERUNG EINES BETRIEBS EINES ELEKTROMOTORS**
METHOD AND APPARATUS FOR CONTROLLING OPERATION OF AN ELECTRIC MOTOR
PROCÉDÉ ET DISPOSITIF DE CONTRÔLE DU FONCTIONNEMENT D'UN MOTEUR ÉLECTRIQUE

(30) Priorität: 06.06.2014 DE 102014210878
(43) Veröffentlichungstag der Anmeldung: 12.04.2017
(73) Patentinhaber: Conti Temic microelectronic GmbH, 90411 Nürnberg (DE)
(72) Erfinder: HINZE, Patrick, 90610 Winkelhaid (DE); LUDWIG, Rainer, 90409 Nürnberg (DE); SCHULZE, Andreas, 91207 Lauf a.d. Peg. / OT Neunhof (DE)
(86) Internationale Anmeldenummer: PCT/EP2015/061804
(87) Internationale Veröffentlichungsnummer: WO 2015/185433

(56) Entgegenhaltungen:
- DE-A1- 4 136 538
- DE-A1- 4 233 804
- DE-A1-102010 001 427
- DE-A1-102011 080 941
- DE-A1-102013 218 569

## Beschreibung

Die Erfindung betrifft ein Verfahren zur Steuerung eines Betriebs eines Elektromotors, insbesondere im Umfeld oder in einer Applikation für ein Fahrzeuggetriebe, wobei an elektrischen Phasen des Elektromotors anliegende elektrische Spannungen in Abhängigkeit einer Rotorposition des Elektromotors gesteuert ausgegeben werden und die Ausgabe der Spannungen der Rotorposition nachgeführt wird.

Die Erfindung betrifft weiterhin eine Vorrichtung zur Steuerung eines Betriebs eines Elektromotors, umfassend eine Versorgungseinheit zur gesteuerten Ausgabe von elektrischen Spannungen an elektrischen Phasen des Elektromotors in Abhängigkeit einer Rotorposition des Elektromotors, wobei die Ausgabe der Spannungen der Rotorposition nachführbar ist.

Elektromechanisch oder hydraulisch betätigte Fahrzeuggetriebe umfassen einen oder mehrere Elektromotoren für Pumpen- oder Direktantriebe, wobei mittels des zumindest einen Elektromotors Wähl- oder Schaltvorrichtungen sowie Kupplungs- und Bremsvorrichtungen des Fahrzeuggetriebes angesteuert werden.

Aus dem Stand der Technik sind verschiedene Verfahren zur Steuerung solcher Elektromotoren für Fahrzeuggetriebe bekannt. Eine Stromzufuhr zu einzelnen Motorwicklungen der Elektromotoren wird insbesondere aus Kostengründen mittels einer so genannten Blockkommutierung und einer so genannten B6-Brückenschaltung gesteuert. Hierbei werden innerhalb eines Kommutierungsschrittes ein so genannter High-Side-Schalter einer Halbbrücke der Brückenschaltung und ein so genannter Low-Side-Schalter der Halbbrücke geschaltet. Der Kommutierungsschritt wird in Abhängigkeit einer Rotorposition des Elektromotors gesteuert, wobei zur Ermittlung der Rotorposition im Elektromotor Hall-Sensoren vorgesehen sind. Die Hall-Sensoren sind derart angeordnet, dass über die High-Low-Logikpegel eine elektrische Winkelauflösung von 60° realisiert ist.

Um diese Winkelauflösung zu erhöhen, ist es bekannt, hochauflösende Winkelsensoren zu verwenden. Somit ist eine bessere Anpassung der an die elektrischen Phasen des Elektromotors ausgegebenen Spannungen an eine jeweilige Rotorposition möglich. Eine dabei realisierte so genannte Sinuskommutierung ermöglicht eine höhere Ausnutzung des Wirkungsgrades des Elektromotors bei gleichzeitig ruhigem Motorlauf. Hierbei wird die elektrische Spannung in Abhängigkeit einer Information über einen Rotorwinkel mittels einer Raumzeigermodulation derart erzeugt, dass diese sinusförmig ist.

Zur weiteren Erhöhung des Wirkungsgrades des Elektromotors bei einer Sinuskommutierung ist bekannt, dass ein Strommaximum in den Motorwicklungen zur Position von Magneten des Rotors derart synchronisiert wird, dass ein fester Versatz von 90° entsteht. Hierzu wird eine so genannte feldorientierte Regelung verwendet, bei welcher Phasenströme des Elektromotors in Verbindung mit der Information über die Rotorposition zur Regelung der ausgegebenen Phasenspannungen verwendet werden. Als Stand der Technik werden DE 10 2010 001427 A1, DE 42 33 804 A1, DE 41 36 538 A1 und DE 10 2013 218569 A1 angesehen.

Der Erfindung liegt die Aufgabe zu Grunde, ein gegenüber dem Stand der Technik verbessertes Verfahren und eine verbesserte Vorrichtung zur Steuerung eines Betriebs eines Elektromotors, insbesondere für ein Fahrzeuggetriebe, anzugeben, welche eine insbesondere bezüglich eines Rechenaufwandes einfache sowie kostengünstige und dennoch schnelle und exakte Steuerung des Betriebs des Elektromotors zur Erreichung eines hohen Wirkungsgrades ermöglichen.

Hinsichtlich des Verfahrens wird die Aufgabe erfindungsgemäß durch die im Anspruch 1 angegebenen Merkmale und hinsichtlich der Vorrichtung durch die in Anspruch 4 angegebenen Merkmale gelöst.

Vorteilhafte Ausgestaltungen der Erfindung sind Gegenstand der Unteransprüche.

In einem Verfahren zur Steuerung eines Betriebs eines Elektromotors werden an elektrischen Phasen des Elektromotors anliegende elektrische Spannungen in Abhängigkeit einer Rotorposition des Elektromotors gesteuert ausgegeben und die Ausgabe der Spannungen wird der Rotorposition nachgeführt.

Erfindungsgemäß wird in Abhängigkeit einer Ist-Drehzahl und zumindest einer, eine Belastung des Elektromotors kennzeichnenden weiteren Größe aus einem Vorsteuerwinkel-Kennfeld ein Vorsteuerwinkel ermittelt, wobei der Vorsteuerwinkel und ein die Rotorposition kennzeichnender Rotorlagewinkel zu einem Summenwinkel addiert werden und in Abhängigkeit des Summenwinkels die Spannungen ermittelt und gesteuert an die elektrischen Phasen des Elektromotors ausgegeben werden.

Das erfindungsgemäße Verfahren ermöglicht aufgrund der Steuerung des Betriebs des Elektromotors unter Verwendung des Vorsteuerwinkel-Kennfeldes eine einfache Struktur des Steuerkreises, wobei lediglich ein geringer Datenverarbeitungsaufwand sowie daraus folgend ein geringer Aufwand für eine Software einer Steuereinheit des Elektromotors erforderlich ist. Durch die so sehr einfach realisierbare Ansteuerung des Elektromotors mit der der Rotorposition nachgeführten Ausgabe der Spannungen wird ein durch Laufzeitverzögerungen von Soft- und Hardware bedingter drehzahlabhängiger Versatz zwischen Erfassung der Information über die Rotorposition und der ausgegebenen Spannung an den Motorklemmen vermieden, so dass ein elektrischer Motorstrom exakt zum Rotor synchronisiert werden kann. Auch kann in einfacher Weise vermieden werden, dass die Induktivität der Motorwicklungen einen drehzahl- und stromabhängigen Versatz zwischen angelegter Spannung an den Motorklemmen und dem Strom in den Wicklungen bewirkt. Weiterhin ist lediglich eine geringe Rechenleistung zur Realisierung des Verfahrens und daraus folgend ein geringer Ressourceneinsatz notwendig. Im Vergleich zu einer feldorientierten Regelung ist stets ein Betrieb des Elektromotors mit optimiertem Wirkungsgrad auch ohne kostenintensive Phasenstromrückmessung realisierbar. Auch ist aufgrund der Verwendung des Vorsteuerwinkel-Kennfeldes in besonders einfacher Weise eine zusätzliche Nutzung des so genannten Reluktanzmoments des Elektromotors möglich, wohingegen bei einer feldorientierten Regelung eine aufwändige Regelstrategie des so genannten d-Anteils erforderlich ist.

Erfindungsgemäss wird das Vorsteuerwinkel-Kennfeld erzeugt, indem zu Drehzahl- und Drehmoment-Betriebspunkten des Elektromotors Vorsteuerwinkel ermittelt werden, bei welchen der Wirkungsgrad des Elektromotors oder ein Gesamtwirkungsgrad von Elektromotor und dessen Ansteuerelektronik inklusive notwendiger Stromzuführen maximiert ist. Somit ist bei Verwendung des Vorsteuerwinkel-Kennfeldes stets ein optimaler Betriebspunkt des Elektromotors bei maximalem Wirkungsgrad einstellbar.

In einer möglichen weiteren Ausgestaltung des Verfahrens werden die Spannungen in Abhängigkeit des Summenwinkels in einer Raumzeigermodulation ermittelt. Mittels der Raumzeigermodulation ist eine sehr hohe Winkelauflösung des ausgegebenen Spannungszeigers, d. h. eine Diskretisierung der ausgegebenen Spannungen von Blockspannungen zur Sinusform, realisierbar und es kann bei hoher Ausnutzung des Wirkungsgrades ein sehr ruhiger Motorlauf realisiert werden.

Eine Weiterbildung des Verfahrens sieht vor, dass der Vorsteuerwinkel in Abhängigkeit der Ist-Drehzahl bei vorgegebenen Belastungen des Elektromotors über ein Wirkungsgradmaximum des Elektromotors hinaus erhöht wird. Somit kann in vorteilhafter Weise insbesondere ein Feldschwächbereich des Elektromotors nutzbar gemacht werden.

Erfindungsgemäss werden als weitere Größe ein aktueller Gleichstrom, ein aus dem Gleichstrom und einem Tastverhältnis ermittelter Phasenstrom, oder ein gemessener Phasenstrom verwendet. Diese Größen bilden die Belastung des Elektromotors besonders genau ab. Bei Verwendung der von einem Regelkreis als Stellgröße verwendeten Motor-spannung als Eingangsgröße für das Vorsteuerwinkel-Kennfeld wird in einem weiteren Beispiel der Nachteil einer schwankenden Versorgungsspannung überwunden, da die Schwankung bei einer möglichen Umrechnung der geforderten Motorspannung in einen Modulationsgrad oder Tastgrad, auch als duty cycle bezeichnet, über die zur Verfügung stehende Zwischenkreisspannung ausgeglichen wird.

Die Vorrichtung zur Steuerung eines Betriebs eines Elektromotors umfasst eine Versorgungseinheit zur gesteuerten Ausgabe von elektrischen Spannungen an elektrischen Phasen des Elektromotors in Abhängigkeit einer Rotorposition des Elektromotors, wobei die Ausgabe der Spannungen der Rotorposition nachführbar ist.

Erfindungsgemäß sind ein Speicher, in welchem ein Vorsteuerwinkel-Kennfeld hinterlegt ist, und eine Steuereinheit vorgesehen, wobei die Steuereinheit zur Ermittlung eines Vorsteuerwinkels aus dem Vorsteuerwinkel-Kennfeld in Abhängigkeit einer Ist-Drehzahl und zumindest einer, eine Belastung des Elektromotors kennzeichnenden weiteren Größe, zur Addition des Vorsteuerwinkel und eines die Rotorposition kennzeichnenden Rotorlagewinkels zu einem Summenwinkel, zur Ermittlung der Spannungen in Abhängigkeit des Summenwinkels und zur Steuerung der Ausgabe der elektrischen Spannungen mittels der Versorgungseinheit an die elektrischen Phasen des Elektromotors ausgebildet ist.

Die erfindungsgemäße Vorrichtung zeichnet sich aufgrund der Steuerung des Betriebs des Elektromotors unter Verwendung des Vorsteuerwinkel-Kennfeldes durch eine besonders einfache und kostengünstige Struktur aus bei besonders geringen erforderlichen Rechenleistungen aus.

In einer möglichen Ausgestaltung der Vorrichtung umfasst die Versorgungseinheit eine Brückenschaltung, beispielsweise eine B6-Brückenschaltung, mittels welcher in sehr einfacher und zuverlässiger Weise eine Blockkommutierung des Elektromotors realisierbar ist.

Ausführungsbeispiele der Erfindung werden im Folgenden anhand von Zeichnungen näher erläutert.

Darin zeigen:
- Figur 1: schematisch ein Blockschaltbild einer Blockansteuerung eines Elektromotors nach dem Stand der Technik,
- Figur 2: schematisch ein Blockschaltbild einer gesteuerten Sinusansteuerung eines Elektromotors nach dem Stand der Technik,
- Figur 3: schematisch ein Blockschaltbild einer feldorientierten Regelung eines Elektromotors nach dem Stand der Technik,
- Figur 4: schematisch ein Ablaufdiagramm eines erfindungsgemäßen Verfahrens, und
- Figur 5: schematisch ein Blockschaltbild einer gesteuerten Sinusansteuerung mit einer erfindungsgemäßen betriebspunktabhängigen Steuerung des Elektromotors mittels eines Vorsteuerwinkels.

Einander entsprechende Teile sind in allen Figuren mit den gleichen Bezugszeichen versehen.

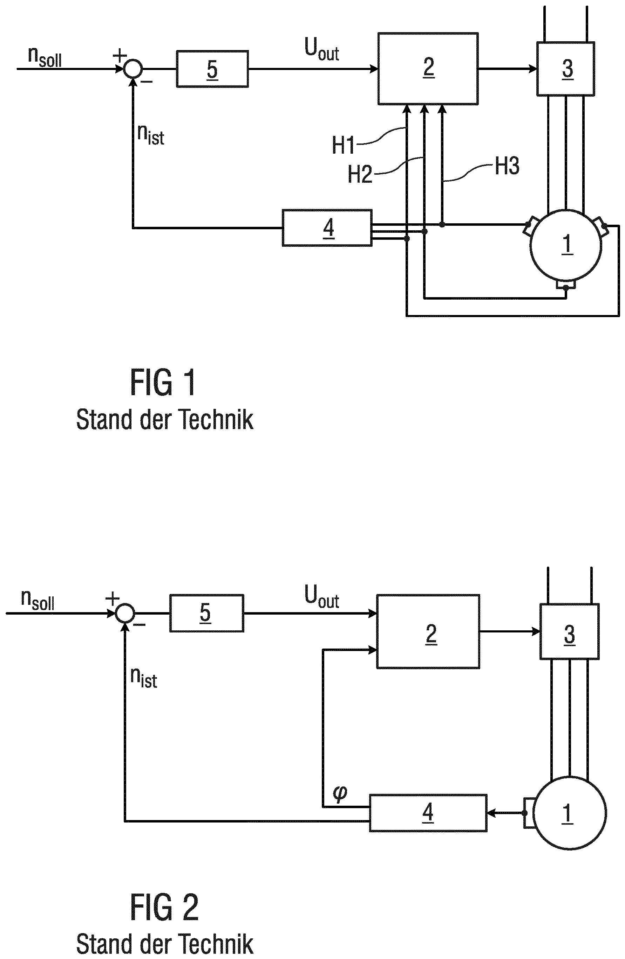

Figur 1 zeigt ein Blockschaltbild einer Blockansteuerung eines Elektromotors 1 nach dem Stand der Technik.

Im Rahmen einer Blockkommutierung wird eine Stromzufuhr zu einzelnen Motorwicklungen des Elektromotors 1 mittels einer Steuereinheit 2 durch Steuerung einer B6-Brücke 3 gesteuert. Hierbei werden in nicht näher dargestellter Weise innerhalb eines Kommutierungsschrittes zur Pulsweitenmodulation ein High-Side-Schalter einer Halbbrücke der B6-Brücke 3 und ein Low-Side-Schalter der Halbbrücke geschaltet. Der Kommutierungsschritt wird- dabei in Abhängigkeit einer Rotorposition des Elektromotors 1 gesteuert, wobei zur Ermittlung der Rotorposition beispielsweise im Elektromotor 1 nicht dargestellte Hall-Sensoren vorgesehen sind, welche Hall-Signale H1 bis H3 erzeugen. Die Hall-Sensoren sind derart angeordnet, dass über die High-Low-Logikpegel eine elektrische Winkelauflösung von 60° realisiert ist. Alternativ oder zusätzlich ist auch eine Verwendung eines Einfachschalters zusammen mit einem gesteuertem Anlauf und einer internen Phasenregelschleife oder eine Verwendung eines optischen Encoders möglich. Alle Erfassungsgeräte haben gemein, dass die Winkelinformation diskret erfasst wird und nicht winkelkontinuierlich.

In einer Recheneinheit 4 wird weiterhin eine Ist-Drehzahl nᵢₛₜ des Elektromotors 1 ermittelt und zurückgeführt, wobei mittels eines Drehzahlreglers 5 in Abhängigkeit einer Soll-Drehzahl nₛₒₗₗ des Elektromotors 1 eine Ausgangsspannung Uout eingestellt wird, in Abhängigkeit welcher die Steuereinheit 2 die B6-Brücke 3 steuert.

In Figur 2 ist ein Blockschaltbild einer gesteuerten Sinusansteuerung eines Elektromotors 1 nach dem Stand der Technik dargestellt, mittels welcher gegenüber der in Figur 1 dargestellten Lösung eine höhere Winkelauflösung erzielbar ist.

Im Unterschied zu dem in Figur 1 dargestellten Blockschaltbild sind in nicht dargestellter Weise hochauflösende Winkelsensoren vorgesehen, aus deren Signale die Recheneinheit 4 ein Rotorlagewinkel ϕ ermittelt wird.

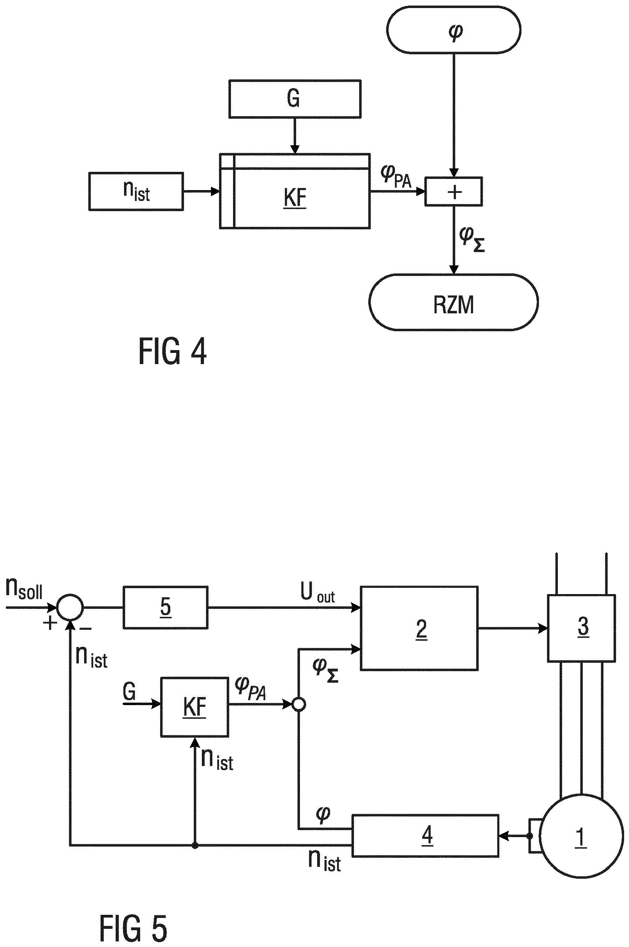

Mittels der Steuereinheit 2 wird in Abhängigkeit des Rotorlagewinkels ϕ die Ausgangsspannung Uₒᵤₜ in einer in Figur 4 näher dargestellten Raumzeigermodulation RZM (englisch: space vector modulation) durch Pulsweitenmodulation derart der B6-Brücke 3 zugeführt, dass diese sinusförmig ist.

Somit sind die an den Elektromotor 1 ausgegebenen elektrischen Spannungen in Sinusform besser an die durch den Rotorlagewinkel ϕ gekennzeichnete Rotorposition anpassbar, wobei mittels der dargestellten so genannten Sinuskommutierung ein höherer Wirkungsgrad und ein ruhiger Motorlauf erreicht werden.

Der maximal mögliche Wirkungsgrad bei einem Motorbetrieb mit Sinuskommutierung wird jedoch nur erreicht, wenn ein Strommaximum in den Motorwicklungen zur Position der Rotormagnete auf einen festen 90°-Versatz synchronisiert ist. Zur Realisierung wird hierzu im Stand der Technik die so genannte feldorientierte Regelung verwendet.

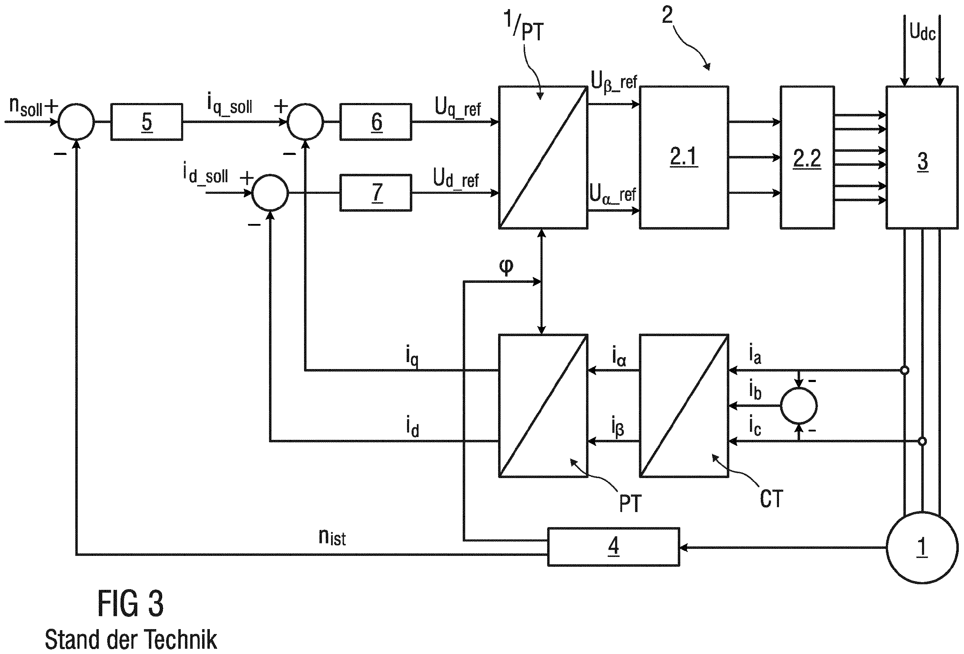

Ein Blockschaltbild einer solchen feldorientierten Regelung eines Elektromotors 1 nach dem Stand der Technik zeigt Figur 3. Hierbei werden in allgemein bekannter Weise gemessene Motorphasenströme iₐ, i_{b}, i_{c} in Verbindung mit dem Rotorlagewinkel ϕ zur Regelung der ausgegebenen Phasenspannungen genutzt, wobei mittels einer so genannten Clarke-Transformation CT zunächst die Stromwerte i_{α}, i_{β} und anschließend aus diesen in einer so genannten Park-Transformation auf ein Drehmoment und eine magnetische Flussdichte des Elektromotors 1 bezogene Stromwerte i_{q}, i_{d} ermittelt werden, wobei mittels Stromreglern 6, 7 in Abhängigkeit der Stromwerte i_{q}, i_{d} und Soll-Stromwerte i_{q_soll}, i_{d_soll} Referenzspannungen U_{q_ref}, U_{d_ref} erzeugt und einer inversen Parktransformation 1/PT zugeführt werden.

In der inversen Parktransformation 1/PT werden wiederum weitere Referenzspannungen U_{α_ref}, U_{β_ref} erzeugt und einem Teil 2.1 der Steuereinheit 2 zur Raumzeigermodulation RZM zugeführt, wobei die Ansteuerung der B6-Brücke 3, an welcher eine Gleichspannung U_{dc} anliegt, mittels eines weiteren Teils 2.2 der Steuereinheit 2 anhand der Pulsweitenmodulation erfolgt.

Nachteilig an der beschriebenen Lösung ist jedoch der hohe Aufwand zur Realisierung der Regelung.

In Figur 4 ist ein Ablaufdiagramm eines erfindungsgemäßen Verfahrens dargestellt, welches zur Überwindung der genannten Nachteile des Standes der Technik vorsieht, den ermittelten Rotorlagewinkel ϕ zur Regelung der ausgegebenen Spannungen derart zu verändern und anschließend der Raumzeigermodulation RZM wieder zuzuführen, dass die ausgegebenen Spannungen an den Motorklemmen, welche jeweils für einen Motorstrom durch die Wicklungen des Elektromotors 1 verantwortlich sind, beliebig zum Rotorfeld orientiert werden können. Somit kann beispielsweise für jeden Betriebspunkt des Elektromotors 1 ein derartiger Stromfluss im Elektromotor 1 generiert werden, welcher einen maximalen Wirkungsgrad und damit ein maximales Drehmoment pro Stromstärke ermöglicht.

Hierzu wird aus Gründen einer möglichst einfachen und kostengünstigen Architektur als Grundlage ein Ansteuerverfahren verwendet, bei welchem die Spannungen in Abhängigkeit der durch den Rotorlagewinkel ϕ gekennzeichneten Rotorposition gesteuert ausgegeben werden. Um die bei dieser einfachen Architektur auftretenden Nachteile, insbesondere einen durch Laufzeitverzögerungen von Soft- und Hardware bedingten drehzahlabhängigen Versatz zwischen Erfassung der Information über die Rotorposition und der ausgegebenen Spannung an den Motorklemmen sowie ein Bewirken eines drehzahl- und stromabhängigen Versatzes zwischen angelegter Spannung an den Motorklemmen und dem Strom in den Wicklungen durch die Induktivität der Motorwicklungen, zu vermeiden, wird die Ausgabe der Spannungen der Rotorposition nachgeführt.

Hierbei wird der ermittelte Rotorlagewinkel ϕ derart verändert und anschließend einer Raumzeigermodulation RZM wieder zugeführt, so dass die ausgegebenen Spannungen an den Motorklemmen, die ihrerseits für den Motorstrom durch die Wicklungen verantwortlich sind, beliebig zum Rotorfeld orientiert werden können.

Zu dieser Realisierung wird in Abhängigkeit der Ist-Drehzahl nᵢₛₜ und einer, eine Belastung des Elektromotors 1 kennzeichnenden weiteren Größe G aus einem Vorsteuerwinkel-Kennfeld KF ein Vorsteuerwinkel ϕ_{PA} ermittelt, welcher mit dem Rotorlagewinkel ϕ zu einem Summenwinkel ϕ_{∑} addiert wird. In Abhängigkeit des Summenwinkels ϕ_{∑} werden die Spannungen als Spannungszeiger in der Raumzeigermodulation RZM ermittelt und gesteuert an die elektrischen Phasen des Elektromotors 1 ausgegeben.

Das Vorsteuerwinkel-Kennfeld KF wird in einer Bedatungsprozedur des Gesamtsystems ermittelt, indem zu Drehzahl- und Drehmoment-Betriebspunkten des Elektromotors 1 Vorsteuerwinkel ϕ_{PA} ermittelt werden, bei welchen zumindest der Wirkungsgrad des Elektromotors 1, insbesondere ein Gesamtwirkungsgrad von Elektromotor 1 und dessen Ansteuerelektronik inklusive notwendiger Stromzuführungen, maximiert ist. Das Vorsteuerwinkel-Kennfeld KF wird insbesondere in einem Speicher hinterlegt.

Eine in einer Steuereinheit 2 arbeitende Ansteuersoftware liest hierbei abhängig vom aktuellen Betriebspunkt des Elektromotors 1 den zugehörigen optimalen Vorsteuerwinkel ϕ_{PA} aus dem Vorsteuerwinkel-Kennfeld KF aus und addiert diesen auf den Rotorlagewinkel ϕ. Als Eingangsparameter des Vorsteuerwinkel-Kennfeldes KF wird neben der aktuellen Ist-Drehzahl nᵢₛₜ des Rotors als die die Belastung des Elektromotors 1 abbildende Größe G eine aktuell geforderte Motorspannung, ein aktueller Gleichstrom, ein aus dem Gleichstrom und einem Tastverhältnis ermittelter Phasenstrom, ein gemessener Phasenstrom und/oder ein Drehmoment verwendet.

Anhand der beschriebenen betriebspunktabhängigen Modifikation des Rotorlagewinkels ϕ werden innerhalb der Raumzeigermodulation RZM notwendige Spannungen berechnet, die den Motorphasenstrom zum optimalen Zeitpunkt in den Motorwicklungen fließen lassen.

Figur 5 zeigt ein Blockschaltbild einer gesteuerten Sinusansteuerung mit einer erfindungsgemäßen betriebspunktabhängigen Steuerung des Elektromotors 1 mittels des Vorsteuerwinkels ϕ_{PA}, wobei zusätzlich zu dem in Figur 2 beschriebenen Verfahren in Abhängigkeit der Ist-Drehzahl nᵢₛₜ und der die Belastung des Elektromotors 1 abbildenden Größe G aus dem Vorsteuerwinkel-Kennfeld KF und dem Rotorlagewinkel ϕ der Summenwinkel ϕ_{∑} erzeugt und der Steuereinheit 2 zur Raumzeigermodulation RZM zugeführt wird, welche aus einer Amplitude des Spannungszeigers und einem optimierten Kommutierungswinkel ein Ansteuersignal für die B6-Brücke 3 generiert.

Abweichend von der Darstellung sind das erfindungsgemäße Verfahren, die erfindungsgemäße Vorrichtung und deren Ausgestaltungen in nicht gezeigter Weise auch in Regelstrukturen mit unterlagertem Stromregler oder sonstigen Regelstrukturen, beispielsweise zu einer direkten Drehmomentregelung, verwendbar und ist nicht auf die dargestellte Struktur gemäß Figur 5 mit Drehzahlregelung beschränkt. Auch sind das Verfahren, die Vorrichtung und deren Ausgestaltungen im Rahmen einer Blocckommutierung anwendbar.

### Bezugszeichenliste

- 1: Elektromotor
- 2: Steuereinheit
- 2.1: Teil
- 2.2: Teil
- 3: B6-Brücke
- 4: Recheneinheit
- 5: Drehzahlregler
- 6: Stromregler
- 7: Stromregler

- CT: Clark-Transformation
- G: Größe
- H1 bis H3: Hall-Signal
- iₐ, i_{b}, i_{c}: Motorphasenströme
- i_{d}, i_{q}: Stromwert
- i_{d_soll}, i_{q_soll}: Stromwert
- i_{α}, i_{β}: Stromwert
- KF: Vorsteuerwinkel-Kennfeld
- nᵢₛₜ: Ist-Drehzahl
- nₛₒₗₗ: Soll-Drehzahl
- PT: Park-Transformation
- 1/PT: inverse Park-Transformation
- RZM: Raumzeigermodulation
- U_{dc}: Gleichspannung
- Uout: Ausgangs spannung
- U_{d_ref}, U_{q_ref}: Referenzspannung
- U_{α_ref}, U_{β_ref}: Referenzspannung

- ϕ: Rotorlagewinkel
- ϕ_{PA}: Vorsteuerwinkel
- ϕ_{∑}: Summenwinkel

## Patentansprüche

1. Verfahren zur Steuerung eines Betriebs eines Elektromotors (1), wobei
- an elektrischen Phasen des Elektromotors (1) anliegende elektrische Spannungen in Abhängigkeit einer Rotorposition des Elektromotors (1) gesteuert ausgegeben werden und
- die Ausgabe der Spannungen der Rotorposition nachgeführt wird,
- wobei in Abhängigkeit einer Ist-Drehzahl (nᵢₛₜ) und zumindest einer, eine Belastung des Elektromotors (1) kennzeichnenden weiteren Größe (G) aus einem Vorsteuerwinkel-Kennfeld (KF) ein Vorsteuerwinkel (ϕ_{PA}) ermittelt wird,
- wobei der Vorsteuerwinkel (ϕ_{PA}) und ein die Rotorposition kennzeichnender Rotorlagewinkel (ϕ) zu einem Summenwinkel (ϕ_{∑}) addiert werden und
- in Abhängigkeit des Summenwinkels (ϕ_{∑}) die Spannungen ermittelt und gesteuert an die elektrischen Phasen des Elektromotors (1) ausgegeben werden, und wobei das Vorsteuerwinkel-Kennfeld (KF) erzeugt wird, indem zu Drehzahl- und Drehmoment-Betriebspunkten des Elektromotors (1) Vorsteuerwinkel (ϕ_{PA}) ermittelt werden, bei welchen zumindest ein Wirkungsgrad des Elektromotors (1) und/oder ein Gesamtwirkungsgrad von Elektromotor (1) und einer Vorrichtung zur Steuerung des Elektromotors (1) inklusive notwendiger Stromzuführungen maximiert ist, **dadurch gekennzeichnet, dass**
als weitere Größe (G) ein aktueller Gleichstrom, ein aus dem Gleichstrom und einem Tastverhältnis ermittelter Phasenstrom oder ein gemessener Phasenstrom verwendet wird.

2. Verfahren nach Anspruch 1,
**dadurch gekennzeichnet, dass** die Spannungen in Abhängigkeit des Summenwinkels (ϕ_{∑}) in einer Raumzeigermodulation (RZM) ermittelt werden.

3. Verfahren nach einem der vorhergehenden Ansprüche, **dadurch gekennzeichnet, dass** der Vorsteuerwinkel (ϕ_{PA}) in Abhängigkeit der Ist-Drehzahl (nᵢₛₜ) bei vorgegebenen Belastungen des Elektromotors (1) über ein Wirkungsgradmaximum des Elektromotors (1) hinaus erhöht wird.

4. Vorrichtung zur Steuerung eines Betriebs eines Elektromotors (1),
- umfassend eine Versorgungseinheit zur gesteuerten Ausgabe von elektrischen Spannungen an elektrischen Phasen des Elektromotors (1) in Abhängigkeit einer Rotorposition des Elektromotors (1),
- wobei die Ausgabe der Spannungen der Rotorposition nachführbar ist, weiterhin umfassend
- einen Speicher, in welchem ein Vorsteuerwinkel-Kennfeld (KF) hinterlegt ist,
- eine Steuereinheit zur Ermittlung eines Vorsteuerwinkels (ϕ_{PA}) aus dem Vorsteuerwinkel-Kennfeld (KF) in Abhängigkeit einer Ist-Drehzahl (nᵢₛₜ) und zumindest einer, eine Belastung des Elektromotors (1) kennzeichnenden weiteren Größe (G), zur Addition des Vorsteuerwinkels (ϕ_{PA}) und eines die Rotorposition kennzeichnenden Rotorlagewinkels (ϕ) zu einem Summenwinkel (ϕ_{∑}), zur Ermittlung der Spannungen in Abhängigkeit des Summenwinkels (ϕ_{∑}) und zur Steuerung der Ausgabe der elektrischen Spannungen mittels der Versorgungseinheit an die elektrischen Phasen des Elektromotors (1), wobei das Vorsteuerwinkel-Kennfeld (KF) erzeugt ist, indem zu Drehzahl- und Drehmoment-Betriebspunkten des Elektromotors (1) Vorsteuerwinkel (ϕ_{PA}) ermittelt werden, bei welchen zumindest ein Wirkungsgrad des Elektromotors (1) und/oder ein Gesamtwirkungsgrad von Elektromotor (1) und einer Vorrichtung zur Steuerung des Elektromotors (1) inklusive notwendiger Stromzuführungen maximiert ist, und in einem Speicher hinterlegt ist, und **dadurch gekennzeichnet, dass** als weitere Größe (G) ein aktueller Gleichstrom, ein aus dem Gleichstrom und einem Tastverhältnis ermittelter Phasenstrom oder ein gemessener Phasenstrom verwendet wird.

5. Vorrichtung nach Anspruch 4 ,
**dadurch gekennzeichnet, dass** die Versorgungseinheit eine Brückenschaltung umfasst.

6. Vorrichtung nach Anspruch 5 ,
**dadurch gekennzeichnet, dass** die Brückenschaltung eine B6-Brückenschaltung ist.

## Claims

1. Method for controlling operation of an electric motor (1), wherein
- electric voltages applied to electrical phases of the electric motor (1) are output in a controlled manner depending on a rotor position of the electric motor (1) and
- the output of the voltages tracks the rotor position,
- wherein a pilot control angle (ϕ_{PA}) is determined from a pilot control angle characteristic diagram (KF) depending on a current rotational speed (nᵢₛₜ) and at least one further variable (G) that characterizes a load of the electric motor (1),
- wherein the pilot control angle (ϕ_{PA}) and a rotor position angle (ϕ) characterizing the rotor position are added so as to form a sum angle (ϕ_{∑}) and
- the voltages are determined and output in a controlled manner to the electrical phases of the electric motor (1) depending on the sum angle (ϕ_{∑}), and wherein the pilot control angle characteristic diagram (KF) is generated by determining pilot control angles (ϕ_{PA}) at rotational speed and torque operating points of the electric motor (1), at which pilot control angles (ϕ_{PA}) at least an efficiency of the electric motor (1) and/or an overall efficiency of the electric motor (1) and of a device for controlling the electric motor (1), including necessary power supplies, is at a maximum, **characterized in that**
a current DC current, a phase current determined from the DC current and a duty cycle or a measured phase current is used as further variable (G).

2. Method according to Claim 1,
**characterized in that** the voltages are determined depending on the sum angle (ϕ_{∑}) in a space vector modulation (RZM).

3. Method according to either of the preceding claims,
**characterized in that** the pilot control angle (ϕ_{PA}) is increased beyond an efficiency maximum of the electric motor (1) depending on the current rotational speed (nᵢₛₜ) at predefined loads of the electric motor (1).

4. Device for controlling operation of an electric motor (1),
- comprising a supply unit for the controlled output of electric voltages to electrical phases of the electric motor (1) depending on a rotor position of the electric motor (1),
- wherein the output of the voltages is able to track the rotor position,
furthermore comprising
- a memory in which a pilot control angle characteristic diagram (KF) is stored,
- a control unit for determining a pilot control angle (ϕ_{PA}) from the pilot control angle characteristic diagram (KF) depending on a current rotational speed (nᵢₛₜ) and at least one further variable (G) that characterizes a load of the electric motor (1), for adding the pilot control angle (ϕ_{PA}) and a rotor position angle (ϕ) characterizing the rotor position so as to form a sum angle (ϕ_{∑}), for determining the voltages depending on the sum angle (ϕ_{∑}) and for controlling the output of the electric voltages to the electrical phases of the electric motor (1) by way of the supply unit, wherein the pilot control angle characteristic diagram (KF) is generated by determining pilot control angles (ϕ_{PA}) at rotational speed and torque operating points of the electric motor (1), at which pilot control angles (ϕ_{PA}) at least an efficiency of the electric motor (1) and/or an overall efficiency of the electric motor (1) and of a device for controlling the electric motor (1), including necessary power supplies, is at a maximum, and is stored in a memory, and **characterized in that** a current DC current, a phase current determined from the DC current and a duty cycle or a measured phase current is used as further variable (G).

5. Device according to Claim 4,
**characterized in that** the supply unit comprises a bridge circuit.

6. Device according to Claim 5,
**characterized in that** the bridge circuit is a B6 bridge circuit.

## Revendications

1. Procédé de commande d'un fonctionnement d'un moteur électrique (1),
- des tensions électriques présentes étant délivrées à des phases électriques du moteur électrique (1) de façon commandée en fonction d'une position de rotor du moteur électrique (1) et
- la délivrance des tensions étant asservie à la position de rotor,
- un angle pilote (ϕ_{PA}) étant déterminé en fonction d'une vitesse de rotation effective (nᵢₛₜ) et d'au moins une autre grandeur (G) supplémentaire caractérisant une charge du moteur électrique (1) à partir d'un champ caractéristique d'angle pilote (KF),
- l'angle pilote (ϕ_{PA}) et un angle de position de rotor (ϕ) caractérisant la position de rotor étant ajoutés pour donner un angle cumulé (ϕ_{∑}) et
- les tensions étant, en fonction de l'angle cumulé (ϕ_{∑}), déterminées et délivrées de façon commandée aux phases électriques du moteur électrique (1), et le champ caractéristique d'angle pilote (KF) étant produit par le fait que, à des points de fonctionnement de vitesse de rotation et de couple du moteur électrique (1), des angles pilotes (ϕ_{PA}) sont déterminés, pour lesquels au moins un rendement du moteur électrique (1) et/ou un rendement global du moteur électrique (1) et d'un dispositif de commande du moteur électrique (1), y compris des amenées de courant nécessaires, est maximisé,
**caractérisé en ce que**,
en tant que grandeur (G) supplémentaire, un courant continu actuel, un courant de phase déterminé à partir du courant continu et d'un rapport cyclique, ou un courant de phase mesuré est utilisé.

2. Procédé selon la revendication 1,
**caractérisé en ce que** les tensions sont déterminées en fonction de l'angle cumulé (ϕ_{∑}) dans une modulation du vecteur spatial (RZM).

3. Procédé selon l'une des revendications précédentes,
**caractérisé en ce que**, en fonction de la vitesse de rotation effective (nᵢₛₜ), en présence de charges prédéfinies du moteur électrique (1), l'angle pilote (ϕ_{PA}) est augmenté au-delà d'un maximum de rendement du moteur électrique (1).

4. Dispositif de commande d'un fonctionnement d'un moteur électrique (1),
- comprenant une unité d'alimentation pour la délivrance commandée de tensions électriques à des phases électriques du moteur électrique (1) en fonction d'une position de rotor du moteur électrique (1),
- la délivrance des tensions pouvant être asservie à la position de rotor,
comprenant en outre
- une mémoire dans laquelle est enregistré un champ caractéristique d'angle pilote (KF),
- une unité de commande pour la détermination d'un angle pilote (ϕ_{PA}) à partir du champ caractéristique d'angle pilote (KF) en fonction d'une vitesse de rotation effective (nᵢₛₜ) et d'au moins une autre grandeur (G) caractérisant une charge du moteur électrique (1), pour l'addition de l'angle pilote (ϕ_{PA}) et d'un angle de position de rotor (ϕ) caractérisant la position de rotor pour donner un angle cumulé (ϕ_{∑}), pour la détermination des tensions en fonction de l'angle cumulé (ϕ_{∑}) et pour la commande de la délivrance, aux phases électriques du moteur électrique (1), des tensions électriques au moyen de l'unité d'alimentation, le champ caractéristique d'angle pilote (KF) étant produit par le fait que, à des points de fonctionnement de vitesse de rotation et de couple du moteur électrique (1), des angles pilotes (ϕ_{PA}) sont déterminés, pour lesquels au moins un rendement du moteur électrique (1) et/ou un rendement global du moteur électrique (1) et d'un dispositif de commande du moteur électrique (1), y compris des amenées de courant nécessaires, est maximisé et est enregistré dans une mémoire, et **caractérisé en ce que**, en tant que grandeur (G) supplémentaire, un courant continu actuel, un courant de phase déterminé à partir du courant continu et d'un rapport cyclique, ou un courant de phase mesuré est utilisé.

5. Dispositif selon la revendication 4,
**caractérisé en ce que** l'unité d'alimentation est un circuit en pont.

6. Dispositif selon la revendication 5,
**caractérisé en ce que** le circuit en pont est un circuit en pont B6.
